# EUROPÄISCHE PATENTSCHRIFT

(11) **EP 3 584 910 B1**
(45) Veröffentlichungstag und Bekanntmachung des Hinweises auf die Patenterteilung: **15.09.2021**
(21) Anmeldenummer: 18178572.6
(22) Anmeldetag: 19.06.2018
(51) Int. Cl.: H02K 5/20, H02K 9/02, B61C 9/50, H02K 5/15, H02K 5/16, H02K 1/32, B61F 15/00

(54) **ELEKTRISCHE MASCHINE MIT VERBESSERTER ABFUHR VON VERLUSTWÄRME**
ELECTRICAL MACHINE WITH IMPROVED DISCHARGE OF THERMAL LOSSES
MACHINE ÉLECTRIQUE À DISSIPATION DE LA CHALEUR PERDUE AMÉLIORÉE

(43) Veröffentlichungstag der Anmeldung: 25.12.2019
(73) Patentinhaber: Siemens Mobility GmbH, 81739 München (DE)
(72) Erfinder: KÖRNER, Olaf, 90469 Nürnberg (DE); MUCHA, Oana, 90453 Nürnberg (DE); WETZEL, Wolfgang, 91074 Herzogenaurach (DE)

(56) Entgegenhaltungen:
- EP-A2- 3 309 941
- DE-U1-202013 011 351
- GB-A- 2 336 038
- US-A1- 2013 257 197

## Beschreibung

Die vorliegende Erfindung geht aus von einer elektrischen Maschine,
- wobei die elektrische Maschine einen Rotor aufweist, der auf einer Rotorwelle angeordnet ist,
- wobei die Rotorwelle in Lagern gelagert ist, so dass der Rotor zusammen mit der Rotorwelle um eine Rotationsachse rotierbar ist,
- wobei der Rotor radial außen von einem Stator und der Stator radial außen von einem Gehäuse umgeben ist,
- wobei an einem ersten und einem zweiten axialen Ende von Rotor und Stator ein erstes und ein zweites Abdeckelement angeordnet sind, mittels derer der Rotor und der Stator gegenüber der Umgebung der elektrischen Maschine gekapselt sind,
- wobei im Gehäuse oder zwischen Gehäuse und Stator axial verlaufende erste Kühlkanäle angeordnet sind.

Die vorliegende Erfindung geht weiterhin aus von einem Fahrgestell eines Schienenfahrzeugs, insbesondere einem Drehgestell,
- wobei das Fahrgestell einen Rahmen aufweist,
- wobei in dem Rahmen eine Radsatzwelle gelagert ist, so dass die Radsatzwelle um eine Wellenachse rotierbar ist,
- wobei in dem Rahmen in Fahrtrichtung des Fahrgestells gesehen vor oder hinter der Radsatzwelle eine elektrische Maschine befestigt ist,
- wobei die Rotorwelle der elektrischen Maschine über ein Getriebe auf die Radsatzwelle wirkt.

Die oben genannten Gegenstände sind allgemein bekannt.

Bei hoch ausgenutzten gekapselten elektrischen Maschinen mit Luftkühlung benötigt man eine intensive Entwärmung der Aktivteile (also von Rotor und Stator) über möglichst große Flächen.

Im Stand der Technik gibt es bei derartigen gekapselten elektrischen Maschinen innerhalb der Kapselung oftmals einen inneren Kühlkreislauf, mittels dessen die im Rotor entstehende Wärme und teilweise auch die im Wickelkopf des Stators entstehende Wärme auf den Stator abgeführt wird. Der Stator selbst wird dadurch gekühlt, dass an einem axialen Ende Kühlluft in axial verlaufende Kühlkanäle eingespeist wird und am anderen axialen Ende wieder aus den Kühlkanälen austritt. Die Kühlkanäle sind am Außenumfang des Stators - also radial außen - geführt.

Die elektrischen Maschinen des Standes der Technik arbeiten bereits recht gut. Sie sind aber noch verbesserungsfähig.

Aus der DE 20 2013 011 351 U1 ist eine Antriebsvorrichtung für ein Rad einer Arbeitsmaschine bekannt, bei welcher der Stator eines Elektromotors Wickelkopfräume zum Aufnehmen von Wickelköpfen aufweist, wobei eine Kühlvorrichtung zum Kühlen des Stators und eines in dem Stator drehbar aufgenommenen Rotors zumindest einen Kühlmittelweg durch die Wickelkopfräume umfasst, welcher über einen umfangsseitigen Kühlmitteleinlass von einer Umfangsseite her mit Kühlmittel versorgbar ist. Aus der GB 2 336 038 A ist eine elektrische Maschine bekannt, bei welcher einerseits im Stator der Maschine Luftführungskanäle in axialer Richtung vorgesehen sind, andererseits zwischen der Außenseite der Maschine und einer die Außenseite in axialer Richtung zumindest teilweise umfassenden Haube Luftführungskanäle gebildet sind, wobei die Kanäle durch Erhebungen insbesondere als Teil des Stators oder der Haube ausgebildet sind.

Die Aufgabe der vorliegenden Erfindung besteht darin, Möglichkeiten zu schaffen, mittels derer die Abfuhr der in der elektrischen Maschine entstehenden Verlustwärme optimiert werden kann.

Die Aufgabe wird durch eine elektrische Maschine mit den Merkmalen des Anspruchs 1 gelöst. Vorteilhafte Ausgestaltungen der elektrischen Maschine sind Gegenstand der abhängigen Ansprüche 2 bis 8.

Dadurch können insbesondere die Rotorwelle und über die Rotorwelle der Rotor besser gekühlt werden.

Die Anzahl an ersten und zweiten Kühlkanälen kann nach Bedarf bestimmt sein. Die Verwendung der Mehrzahl für die ersten und zweiten Kühlkanäle ist daher im generischen Sinne zu verstehen. Minimal sind aber mindestens ein erster und mindestens ein zweiter Kühlkanal vorhanden. Analoge Ausführungen gelten für die Rotorkanäle. Die Bezeichnung der Rotorkanäle als solche dient weiterhin lediglich der Unterscheidung von den ersten und zweiten Kühlkanälen und um zu verdeutlichen, dass die Rotorkanäle Bestandteile der Rotorwelle und/oder des Rotors sind. Eine weitergehende Bedeutung kommt der Wortwahl nicht zu.

In vielen Fällen weist das Gehäuse orthogonal zur Rotationsachse gesehen eine quadratische Außenkontur auf. In diesem Fall sind vorzugsweise die ersten Kühlkanäle in zumindest einem Seitenbereich der Außenkontur angeordnet, insbesondere in genau einem Seitenbereich der Außenkontur. In diesem Seitenbereich befindet sich in diesem Fall auch der Lufteinlass. Die zweiten Kühlkanäle sind im Falle einer quadratischen Außenkontur vorzugsweise in den Eckbereichen der Außenkontur angeordnet. Eine quadratische Außenkontur weist - selbstverständlich - vier Eckbereiche auf. Die Anzahl an Eckbereichen, in denen die zweiten Kühlkanäle angeordnet sind, kann nach Bedarf bei 1, 2, 3 oder 4 liegen.

Erfindungsgemäß ist das innere Ringelement radial außen zumindest über einen Teilumfang von einem äußeren Ringelement umgeben. In diesem Fall sind im Gehäuse oder zwischen Gehäuse und Stator zusätzlich auch axial verlaufende dritte Kühlkanäle angeordnet. Dadurch wird ein weiterer Teil des Kühlluftstroms dem äußeren Ringelement oder einem Zwischenraum zwischen dem Gehäuse und dem äußeren Ringelement zugeführt, dort tangential umgelenkt und den dritten Kühlkanälen zugeführt. Mittels der dritten Kühlkanäle wird dieser Teil des Kühlluftstroms sodann axial durch die elektrische Maschine geführt, bevor er in die Umgebung der elektrischen Maschine entweicht.

Das äußere Ringelement kann sich im Einzelfall vollständig um das innere Ringelement herum erstrecken. In vielen Fällen ist es jedoch von Vorteil, wenn das äußere Ringelement sich von der Rotationsachse aus gesehen nur über einen Winkelbereich von ca. 180° oder weniger erstreckt, insbesondere von ca. 90° oder ca. 45°. Die Winkelbereiche sind deshalb mit "ca." angegeben, weil sie in der Praxis geringfügig größer als der jeweils angegebene Winkel sein müssen, um in Umfangsrichtung um die Rotationsachse herum gesehen nicht nur die Winkelbereiche zwischen den dritten Kühlkanälen, sondern zusätzlich auch die dritten Kühlkanäle selbst zu überdecken.

Auch die Anzahl an dritten Kühlkanälen kann nach Bedarf bestimmt sein. Die Verwendung der Mehrzahl für die dritten Kühlkanäle ist daher - analog zu den ersten und zweiten Kühlkanälen - im generischen Sinne zu verstehen. Minimal ist aber in dieser Ausgestaltung mindestens ein dritter Kühlkanal vorhanden.

Mindestens eines der Abdeckelemente ist vorzugsweise rotorfest befestigt. Es ist also am Rotor oder an der Rotorwelle drehfest befestigt. Dadurch ist es möglich, dass das entsprechende Abdeckelement an der Außenseite mit Förderelementen (beispielsweise Schaufeln oder dergleichen) versehen wird. Da sich die Rotorwelle im Betrieb der elektrischen Maschine dreht, wirkt das Abdeckelement dadurch als Lüfter, welche den Luftstrom durch die Rotorwelle unterstützt. Gegebenenfalls kann es bei Ausfall eines externen Lüfters sogar einen Notbetrieb aufrechterhalten. Falls es einen inneren Luftkreislauf gibt, kann auch der innere Luftkreislauf durch Förderelemente an der Innenseite des entsprechenden Abdeckelements unterstützt werden.

Vorzugsweise halten das Luftführungselement und/oder das innere Ringelement jeweils eines der Lager. Das Luftführungselement und/oder das innere Ringelement sind also vorzugsweise als Lagerschilde der elektrischen Maschine ausgebildet. Dadurch kann der konstruktive Aufbau der elektrischen Maschine einfach und unkompliziert gehalten werden.

Vorzugsweise bestehen das Luftführungselement und/oder das innere Ringelement aus Aluminium oder einer Aluminiumlegierung, d.h. einer Legierung verschiedener Metalle, bei denen Aluminium den Hauptbestandteil bildet. Aluminium bietet eine relativ hohe Materialfestigkeit und dennoch zugleich eine hohe Wärmeleitfähigkeit. Dadurch kann - zusätzlich durch die Wärmeabfuhr über Rotorkanäle und die zweiten und gegebenenfalls auch dritten Kühlkanäle - auch über das Luftführungselement und/oder das innere Ringelement Wärme an die Umgebung der elektrischen Maschine abgegeben werden. Gegebenenfalls kann auch das äußere Ringelement aus gleichgelagerten Gründen aus Aluminium oder einer Aluminiumlegierung bestehen.

Der Lufteinlass ist vorzugsweise an der Oberseite des Gehäuses angeordnet. Dies ist insbesondere aus konstruktiven Gründen von Vorteil.

Vorzugsweise bestehen die Abdeckelemente aus Aluminium, aus Kupfer oder aus einer Aluminium- oder Kupferlegierung - d.h. einer Legierung verschiedener Metalle, bei denen Aluminium oder Kupfer den Hauptbestandteil bilden - oder enthalten Blöcke aus diesen Materialien. Derartige Materialien weisen eine hohe Wärmeleitfähigkeit auf, so dass sie als zusätzlicher direkter Wärmetauscher zwischen dem Rotor und/oder dem Stator auf der einen Seite und dem Kühlluftstrom auf der anderen Seite wirken. Soweit erforderlich, können die Abdeckelemente zusätzlich die Oberfläche vergrößernde Elemente wie beispielsweise Stifte oder Kühlrippen aufweisen.

Die Aufgabe wird weiterhin durch ein Fahrgestell eines Schienenfahrzeugs mit den Merkmalen des Anspruchs 10 gelöst. Vorteilhafte Ausgestaltungen des Fahrgestells sind Gegenstand der abhängigen Ansprüche 10 und 11.

Erfindungsgemäß wird ein Fahrgestell der eingangs genannten Art dadurch ausgestaltet, dass die elektrische Maschine als erfindungsgemäße elektrische Maschine ausgebildet ist.

In Verbindung mit der quadratischen Außenkontur der elektrischen Maschine sind vorzugsweise zumindest im unteren der beiden der Radsatzwelle zugewandten Eckbereiche zweite Kühlkanäle angeordnet. Falls die elektrische Maschine die dritten Kühlkanäle aufweist, sind vorzugsweise zumindest im oberen der beiden von der Radsatzwelle abgewandten Eckbereiche dritte Kühlkanäle angeordnet. Durch diese Ausgestaltungen kann die erfindungsgemäße elektrische Maschine verwendet werden, ohne die Bodenfreiheit der elektrischen Maschine zu einem Untergrund, über den das Fahrgestell fährt, zu reduzieren.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Halbschnitt durch eine elektrische Maschine,
- FIG 2: einen gegenüber FIG 1 vergröberten Vollschnitt,
- FIG 3: eine perspektivische Darstellung eines Luftführungselements,
- FIG 4: einen Schnitt durch das Luftführungselement von FIG 3,
- FIG 5: eine perspektivische Darstellung eines inneren Ringelements,

- FIG 6: einen Schnitt durch das innere Ringelement von FIG 3,
- FIG 7: eine Ansicht der elektrischen Maschine von FIG 2 aus einer Richtung A in FIG 2,
- FIG 8: eine perspektivische Ansicht eines Gehäuses der elektrischen Maschine von FIG 2,
- FIG 9: ein Fahrgestell eines Schienenfahrzeugs aus einer Richtung IX-IX in FIG 10 und
- FIG 10: das Fahrgestell von FIG 9 von oben.

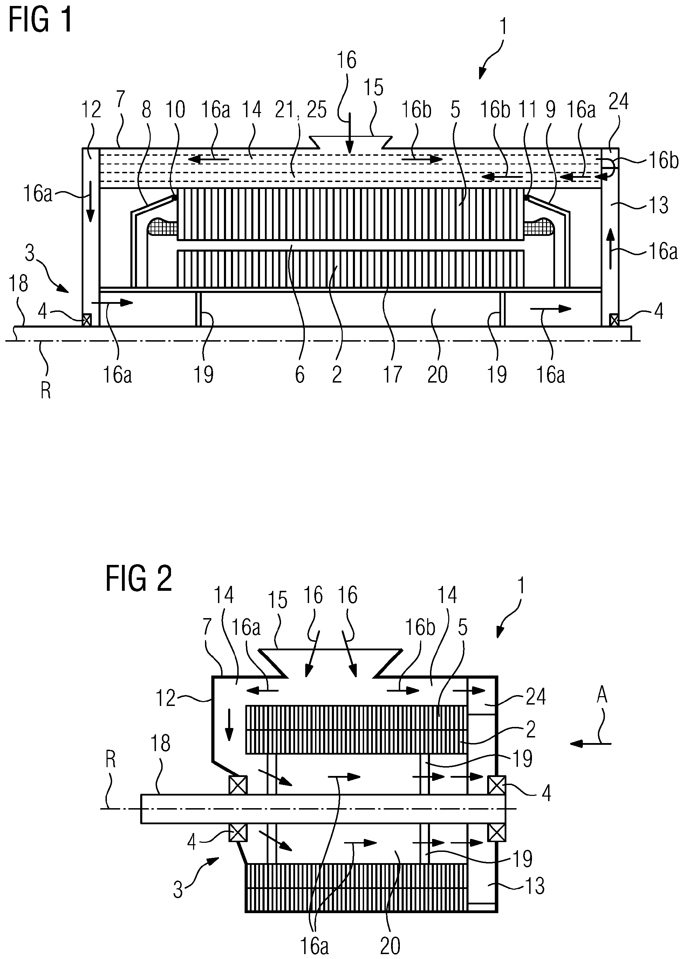

Gemäß den FIG 1 und 2 weist eine elektrische Maschine 1 einen Rotor 2 auf. Der Rotor 2 ist auf einer Rotorwelle 3 angeordnet. Die Rotorwelle 3 ist in Lagern 4 gelagert. Dadurch ist der Rotor 2 zusammen mit der Rotorwelle 3 um eine Rotationsachse R rotierbar.

Soweit nachfolgend die Begriffe "axial", "radial" und "tangential" verwendet werden, sind sie stets auf die Rotationsachse R bezogen. "Axial" ist eine Richtung parallel zur Rotationsachse R. "Radial" ist eine Richtung orthogonal zur Rotationsachse R auf die Rotationsachse R zu oder von ihr weg. "Tangential" ist eine Richtung, die sowohl orthogonal zur Axialrichtung als auch orthogonal zur Radialrichtung orientiert ist. "Tangential" ist also eine Richtung, die bei einer konstanten Axialposition und in einem konstanten radialen Abstand von der Rotationsachse R kreisförmig um die Rotationsachse R herum gerichtet ist.

Der Rotor 2 ist radial außen von einem Stator 5 umgeben. Zwischen dem Rotor 2 und dem Stator 5 befindet sich ein Luftspalt 6 (nur in FIG 1 erkennbar). Der Stator 5 seinerseits ist radial außen von einem Gehäuse 7 umgeben.

Bezüglich des elektrischen Zusammenwirkens von Rotor 2 und Stator 5 kann die elektrische Maschine 1 nach Bedarf ausgebildet sein. Es kann sich um eine Asynchronmaschine, um eine Synchronmaschine oder um eine Gleichstrommaschine handeln. Oftmals handelt es sich um eine höherpolige permanenterregte Synchronmaschine mit typischerweise sechs bis sechzehn Polen. Bei derartigen Maschinen können die Joche von Rotor 2 und Stator 5 relativ niedrig ausgeführt werden.

An einem ersten axialen Ende von Rotor 2 und Stator 5 - nachfolgend als A-Seite bezeichnet - ist ein erstes Abdeckelement 8 angeordnet. Mittels des ersten Abdeckelements 8 sind der Rotor 2 und der Stator 5 an der A-Seite gegenüber der Umgebung der elektrischen Maschine 1 gekapselt. In analoger Weise ist an einem zweiten axialen Ende von Rotor 2 und Stator 5 - nachfolgend als B-Seite bezeichnet - ein zweites Abdeckelement 9 angeordnet. Mittels des zweiten Abdeckelements 9 sind der Rotor 2 und der Stator 5 an der B-Seite gegenüber der Umgebung der elektrischen Maschine 1 gekapselt. Die Abdeckelemente 8, 9 können beispielsweise als Scheiben ausgebildet sein. Soweit erforderlich, können zur Abdichtung entsprechend der Darstellung in FIG 1 zusätzlich ein erstes und ein zweites Dichtungselement 10, 11 - beispielsweise jeweils eine Labyrinthdichtung - vorhanden sein. Die Abdeckelemente 8, 10 sind vorzugsweise rotorfest befestigt, d.h. sie drehen sich zusammen mit dem Rotor 2. Prinzipiell wäre jedoch auch eine statorfeste Befestigung möglich. Derartige Kapselungen von Rotor 2 und Stator 5 sind Fachleuten allgemein bekannt. Die Kapselung muss daher nicht näher erläutert werden.

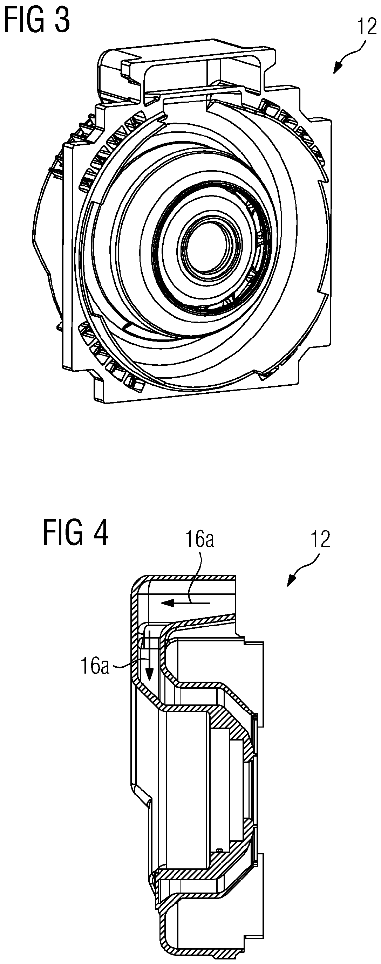

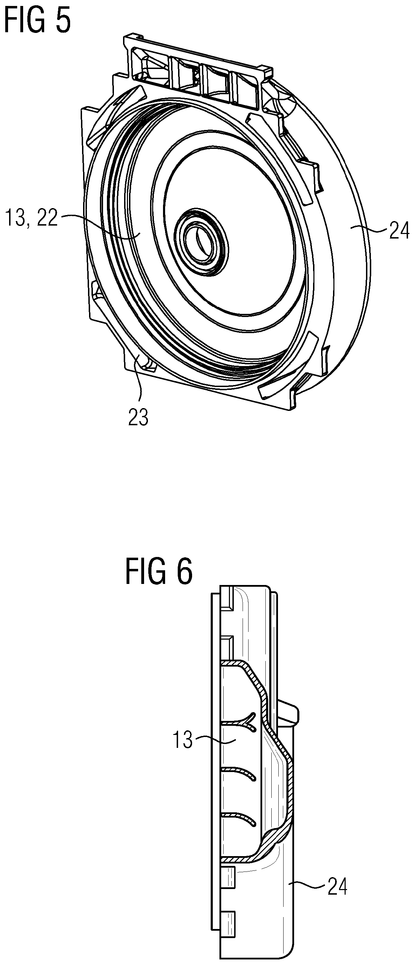

Das erste Abdeckelement 8 ist radial außen und axial auf der von Rotor 2 und Stator 5 abgewandten Seite von einem Luftführungselement 12 umgeben. FIG 3 zeigt eine perspektivische Darstellung des Luftführungselements 12, FIG 4 einen Schnitt durch das Luftführungselement 12. Das zweite Abdeckelement 9 ist radial außen und axial auf der von Rotor 2 und Stator 5 abgewandten Seite von einem inneren Ringelement 13 umgeben. FIG 5 zeigt eine perspektivische Darstellung des inneren Ringelements 13, FIG 6 einen Schnitt durch das innere Ringelement 13. Das Luftführungselement 12 und das innere Ringelement 13 können prinzipiell aus beliebigen Materialien bestehen. Insbesondere können sie aus Stahl bestehen. Vorzugsweise bestehen jedoch das Luftführungselement 12 und/oder das innere Ringelement 13 aus Aluminium oder einer Aluminiumlegierung.

Die elektrische Maschine 1 weist erste Kühlkanäle 14 auf. Die ersten Kühlkanäle 14 sind relativ weit radial außen angeordnet und verlaufen axial. Sie sind im vorliegenden Fall in das Gehäuse 7 eingebracht. Alternativ können sie durch Zwischenräume zwischen dem Gehäuse 7 und dem Stator 5 gebildet werden. Die ersten Kühlkanäle 14 sind also im Gehäuse 7 oder zwischen Gehäuse 7 und Stator 5 angeordnet. Sie sind tangential geschlossen und radial - außer am Bereich eines Lufteinlasses 15 (dazu gleich) - ebenfalls geschlossen. Ein Kühlluftstrom 16, der den ersten Kühlkanälen 14 über den Lufteinlass 15 zugeführt wird, kann also nur an den axialen Enden der ersten Kühlkanäle 14 aus den ersten Kühlkanälen 14 austreten, nicht aber in radialer oder in tangentialer Richtung.

Das Gehäuse 7 weist weiterhin radial außen den soeben erwähnten Lufteinlass 15 auf. Der Lufteinlass 15 ist in Axialrichtung gesehen vorzugsweise in etwa mittig zwischen den beiden Enden von Rotor 2 und Stator 5 angeordnet. Über den Lufteinlass 15 wird den ersten Kühlkanälen 14 - beispielsweise mittels eines nicht dargestellten Lüfters - der ebenfalls bereits erwähnte Kühlluftstrom 16 zugeführt. Der Kühlluftstrom 16 wird über die ersten Kühlkanäle 14 zumindest teilweise - siehe das Bezugszeichen 16a - dem Luftführungselement 12 zugeführt. Alternativ könnte der Kühlluftstrom 16 bzw. der entsprechende Teil des Kühlluftstroms 16 einem Zwischenraum zwischen dem ersten Abdeckelement 8 und dem Luftführungselement 12 zugeführt werden. Dort wird der Kühlluftstrom 16 bzw. der entsprechende Teil des Kühlluftstroms 16 nach radial innen umgelenkt. Er wird sodann durch die Rotorwelle 3 hindurch der B-Seite zugeführt. Die Rotorwelle 3 kann zu diesem Zweck beispielsweise als Hohlwelle ausgebildet sein, die einen Außenreifen 17, eine Nabe 18 und dazwischen Speichen 19 aufweist. Die Speichen 19 können in Axialrichtung gesehen durchgehend sein oder, wie in FIG 2 dargestellt, nur in vorbestimmten axialen Abständen voneinander angeordnet sein. Auch andere Ausgestaltungen, bei denen in die Rotorwelle 3 beispielsweise Bohrungen oder dergleichen eingebracht sind, sind möglich. Die Rotorkanäle 20 können alternativ auch durch Zwischenräume zwischen dem Rotor 2 und der Rotorwelle 3 gebildet werden oder im Rotor 2 selbst angeordnet sein. In jedem Fall sind jedoch in der Rotorwelle 3 und/oder im Rotor 2 axial verlaufende Rotorkanäle 20 angeordnet, über welche der Kühlluftstrom 16 bzw. der entsprechende Teil des Kühlluftstroms 16 zur B-Seite geführt wird.

An der B-Seite wird der Kühlluftstrom 16 bzw. der entsprechende Teil des Kühlluftstroms 16 dem inneren Ringelement 13 zugeführt. Im inneren Ringelement 13 wird der Kühlluftstrom 16 bzw. der entsprechende Teil des Kühlluftstroms 16 nach radial außen umgelenkt und zweiten Kühlkanälen 21 zugeführt. Das innere Ringelement 13 kann beispielsweise einen inneren Ringraum 22 aufweisen, der über einen jeweiligen Stichkanal 23 mit dem jeweiligen zweiten Kühlkanal 21 kommunizierend verbunden ist. Gemäß der Darstellung in FIG 5 ist nur in einer einzigen Ecke ein einziger Stichkanal 23 vorhanden. Es könnten aber auch in mehreren Ecken Stichkanäle 23 vorhanden sein. Die Verbindung des Stichkanal 23 dem Ringraum 22 ist in FIG 5 verdeckt. Sie ist aber vorhanden.

Man erkennt in den FIG 3 und 4 oben beispielsweise die Eintrittsöffnung für den Kühlluftstrom 16 bzw. den entsprechenden Teil des Kühlluftstroms 16, über welche der Kühlluftstrom 16 bzw. der entsprechende Teil des Kühlluftstroms 16 einem unterhalb der Eintrittsöffnung angeordneten Ringraum zugeführt wird. Man erkennt weiterhin auf der abgewandten Seite in Eckbereichen Kühlrippen. Die Kühlrippen stellen eine Fortsetzung von zweiten und/oder dritten Kühlkanälen 21, 25 dar. Die zweiten und/oder dritten Kühlkanälen 21, 25 als solche werden später näher erläutert.

Alternativ zur Führung des Kühlluftstroms 16 bzw. des entsprechende Teils des Kühlluftstroms 16 durch das innere Ringelement 13 ist es möglich, dass der Kühlluftstrom 16 bzw. der entsprechende Teil des Kühlluftstroms 16 einem Zwischenraum zwischen dem zweiten Abdeckelement 9 und dem inneren Ringelement 13 zugeführt wird und die Führung des Kühlluftstroms 16 bzw. des entsprechende Teils des Kühlluftstroms 16 durch diesen Zwischenraum erfolgt.

Die zweiten Kühlkanäle 21 sind - analog zu den ersten Kühlkanälen 14 - relativ weit radial außen angeordnet und verlaufen axial. Sie sind im vorliegenden Fall in das Gehäuse 7 eingebracht. Alternativ können sie durch Zwischenräume zwischen dem Gehäuse 7 und dem Stator 5 gebildet werden. Die zweiten Kühlkanäle 21 sind also im Gehäuse 7 oder zwischen Gehäuse 7 und Stator 5 angeordnet. Sie sind tangential und radial geschlossen. Kühlluft, die sich in den zweiten Kühlkanälen 21 befindet, kann also nur an den axialen Enden der zweiten Kühlkanäle 21 aus den zweiten Kühlkanälen 21 austreten, nicht aber in radialer oder in tangentialer Richtung. Der Kühlluftstrom 16 bzw. der entsprechende Teil des Kühlluftstroms 16 wird somit mittels der zweiten Kühlkanäle 21 axial durch die elektrische Maschine 1 geführt. Danach entweicht der Kühlluftstrom 16 bzw. der entsprechende Teil des Kühlluftstroms 16 in die Umgebung der elektrischen Maschine 1.

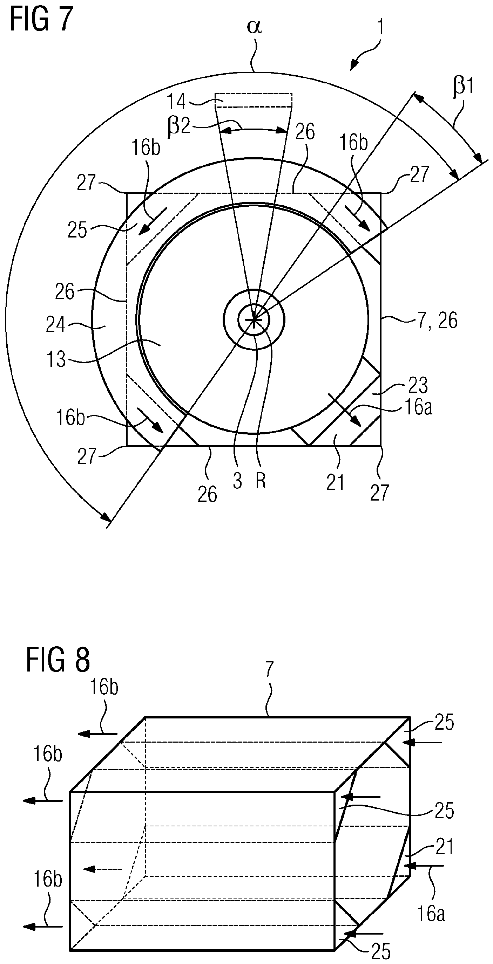

Die FIG 1 bis 6 zeigen zugleich auch verschiedene bevorzugte Ausgestaltungen der elektrischen Maschine 1. Insbesondere ist das innere Ringelement 13 - siehe ergänzend FIG 7 - radial außen von einem äußeren Ringelement 24 umgeben. In manchen Fällen kann das äußere Ringelement 24 sich in Tangentialrichtung gesehen vollständig um das innere Ringelement 13 herum erstrecken. In vielen Fällen ist es jedoch entsprechend der Darstellung in FIG 7 ausreichend und oftmals sogar von Vorteil, wenn das äußere Ringelement 24 sich in Tangentialrichtung nur über einen Winkelbereich α von ca. 180° oder weniger erstreckt, insbesondere von ca. 90° oder ca. 45°. Dies wird aus späteren Ausführungen noch ersichtlich werden. Aus diesen Ausführungen wird auch ersichtlich werden, dass der Winkelbereich α in der Regel etwas über 180°, etwas über 90° oder etwas über 45° liegen wird. Das äußere Ringelement 24 kann gegebenenfalls mit dem inneren Ringelement 13 eine Baueinheit bilden. Beispielsweise können das innere Ringelement 13 und das äußere Ringelement 24 als einheitliches Gussteil hergestellt sein.

Wenn das äußere Ringelement 24 vorhanden ist, sind weiterhin auch dritte Kühlkanäle 25 vorhanden. Die dritten Kühlkanäle 25 korrespondieren bezüglich ihrer Anordnung und Funktion vom Ansatz her mit den zweiten Kühlkanälen 21. Sie sind also ebenfalls relativ weit radial außen angeordnet, verlaufen axial und sind tangential und radial geschlossen. Sie sind im vorliegenden Fall in das Gehäuse 7 eingebracht. Alternativ können sie durch Zwischenräume zwischen dem Gehäuse 7 und dem Stator 5 gebildet werden. Die dritten Kühlkanäle 25 sind also im Gehäuse 7 oder zwischen Gehäuse 7 und Stator 5 angeordnet. Aufgrund des Umstands, dass die dritten Kühlkanälen 25 tangential und radial geschlossen sind, kann Kühlluft, die sich in den dritten Kühlkanälen 25 befindet, nur an den axialen Enden der dritten Kühlkanälen 25 aus den dritten Kühlkanälen 25 austreten, nicht aber in radialer oder in tangentialer Richtung. Man erkennt in FIG 5 beispielsweise die Eintrittsöffnung für den entsprechenden Teil 16b des Kühlluftstroms 16. Man erkennt weiterhin in drei Ecken - ohne Bezugszeichen - Stichkanäle, über welche der entsprechende Teil 16b des Kühlluftstroms 16 den dritten Kühlkanälen 25 zugeführt wird. Die Verbindungen dieser Stichkanäle mit der Eintrittsöffnung für den entsprechenden Teil 16b des Kühlluftstroms 16 sind in FIG 5 verdeckt. Sie sind aber vorhanden.

Wenn das äußere Ringelement 24 und die dritten Kühlkanäle 25 vorhanden sind, wird nur ein Teil des Kühlluftstroms 16 über die ersten Kühlkanäle 14, die Rotorkanäle 20 und die zweiten Kühlkanäle 21 geführt. Der verbleibende Teil des Kühlluftstroms 16 - siehe das Bezugszeichen 16b - wird über die ersten Kühlkanäle 14 direkt der B-Seite zugeführt. An der B-Seite wird der entsprechende Teil 16b des Kühlluftstroms 16 dem äußeren Ringelement 24 zugeführt. Im äußeren Ringelement 24 wird der entsprechende Teil 16b des Kühlluftstroms 16 tangential zu den dritten Kühlkanälen 25 hin umgelenkt und so den dritten Kühlkanälen 25 zugeführt. Mittels der dritten Kühlkanäle 25 wird der entsprechende Teil 16b des Kühlluftstroms 16 axial durch die elektrische Maschine 1 geführt. Er entweicht sodann in die Umgebung der elektrischen Maschine 1. Alternativ zur Führung des entsprechenden Teils 16b des Kühlluftstroms 16 durch das äußere Ringelement 24 ist es möglich, dass der entsprechende Teil 16b des Kühlluftstroms 16 einem Zwischenraum zwischen dem Gehäuse 7 und dem äußeren Ringelement 24 zugeführt wird und die Führung des entsprechenden Teils 16b des Kühlluftstroms 16 durch diesen Zwischenraum erfolgt.

In der Praxis weist das Gehäuse 7 - siehe die FIG 7 und 8 - oftmals eine quadratische Außenkontur auf. In diesem Fall sind die ersten Kühlkanäle 14 in zumindest einem Seitenbereich 26 der Außenkontur angeordnet, meist sogar nur in einem einzigen Seitenbereich 26. Insbesondere sind sie in demjenigen Seitenbereich 26 angeordnet, in dem sich auch der Lufteinlass 15 befindet. Der Lufteinlass 15 wiederum ist - unabhängig vom Vorhandensein einer quadratischen Außenkontur - in der Regel an der Oberseite des Gehäuses 7 angeordnet. In Eckbereichen 27 der Außenkontur sind die ersten Kühlkanäle 14 hingegen nicht angeordnet.

Die zweiten Kühlkanäle 21 und - falls vorhanden - auch die dritten Kühlkanäle 25 - sind hingegen vorzugsweise in den Eckbereichen 27 der Außenkontur angeordnet. In den Seitenbereichen 26 sind die zweiten Kühlkanäle 21 und gegebenenfalls auch die dritten Kühlkanäle 25 hingegen nicht angeordnet. Falls nur die zweiten Kühlkanäle 21 vorhanden sind, können in allen vier Eckbereichen 27 jeweils ein oder mehrere zweite Kühlkanäle 21 angeordnet sein. Falls sowohl die zweiten als auch die dritten Kühlkanäle 21, 25 vorhanden sind, sind in aller Regel jedem Eckbereich 27 entweder zweite Kühlkanäle 21 oder dritte Kühlkanäle 25 angeordnet, nicht aber gemischt zweite und dritte Kühlkanäle 21, 25. In seltenen Ausnahmefällen kann aber auch eine derartige Mischung sinnvoll sein.

Vorzugsweise sind also einem der Eckbereiche 27 ausschließlich zweite Kühlkanäle 21 angeordnet, in einem anderen der Eckbereiche 27 ausschließlich dritte Kühlkanäle 25. Diese beiden Eckbereiche 27 liegen einander in der Regel entsprechend der Darstellung in den FIG 7 und 8 diametral gegenüber. In den beiden anderen Endbereichen 27 können nach Bedarf entweder zweite oder dritte Kühlkanäle 21, 25 angeordnet sein. Wenn entsprechend der Darstellung in FIG 7 nur in einem einzigen Eckbereich 27 zweite Kühlkanäle 21 angeordnet sind und in drei Eckbereichen 27 dritte Kühlkanäle 25 angeordnet sind, erstreckt sich das äußere Ringelement 24 in Tangentialrichtung vorzugsweise über einen Winkelbereich α von ca. 180°. Wenn in zwei Eckbereichen 27 zweite Kühlkanäle 21 angeordnet sind und in zwei Eckbereichen 27 dritte Kühlkanäle 25 angeordnet sind, erstreckt sich das äußere Ringelement 24 in Tangentialrichtung vorzugsweise über einen Winkelbereich α von ca. 90°. Wenn in drei Eckbereichen 27 zweite Kühlkanäle 21 angeordnet sind und nur in einem einzigen Eckbereich 27 dritte Kühlkanäle 25 angeordnet sind, erstreckt sich das äußere Ringelement 24 in Tangentialrichtung vorzugsweise über einen Winkelbereich α von ca. 45°. Der jeweils angegebene Winkelbereich α von 180°, 90° oder 45° wird in der Regel etwas überschritten werden, nämlich um denjenigen Winkel β1, den von der Rotationsachse R aus gesehen die dritten Kühlkanäle 25 in je einem der Eckbereiche 27 jeweils überdecken, gegebenenfalls zuzüglich um die Hälfte des Winkels β2, den von der Rotationsachse R aus gesehen die ersten Kühlkanäle 14 in dem einen Seitenbereich 26 überdecken.

Die Abdeckelemente 8, 9 bestehen vorzugsweise aus Aluminium, Kupfer oder einer eines dieser Metalle enthaltenden Legierung. Dadurch können sie - zusätzlich zu den Oberflächen der Rotorwelle 3 und des Stators 5, an denen die Kühlluftströme 16, 16a, 16b entlang strömen - ebenfalls als Wärmetauscher fungieren. Gleiches gilt, wenn die Abdeckelemente 8, 9 beispielsweise zwar im wesentlichen aus Gusseisen bestehen, Blöcke aus diesen Materialien enthalten. Es kann also über die Abdeckelemente 8, 9 zusätzlich Wärme aus dem gekapselten Raum, in dem sich der Rotor 2 und der Stator 5 befinden, abgeführt werden. Soweit erforderlich, können die Abdeckelemente 8, 9 zur Erhöhung der Wärmetauscherfunktion zusätzliche Elemente aufweisen, welche ihre Oberfläche vergrößern. Beispiele derartiger Elemente sind Stifte und Kühlrippen.

Das Luftführungselement 12 und das innere Ringelement 13 können eigenständige Elemente sein, denen über die Führung des Kühlluftstroms 16 hinaus keine weitere Funktion zukommt. Vorzugsweise halten jedoch das Luftführungselement 12 und/oder das innere Ringelement 13 entsprechend der Darstellung in den FIG 1 und 2 jeweils eines der Lager 4. In diesem Fall sind also das Luftführungselement 12 und/oder das innere Ringelement 13 - gegebenenfalls die Einheit von inneren Ringelement 13 und äußeren Ringelement 24 - als Lagerschilde der elektrischen Maschine 1 ausgebildet bzw. übernehmen umgekehrt die Lagerschilde der elektrischen Maschine 1 die Funktion des Luftführungselements 12 und/oder des inneren Ringelements 13.

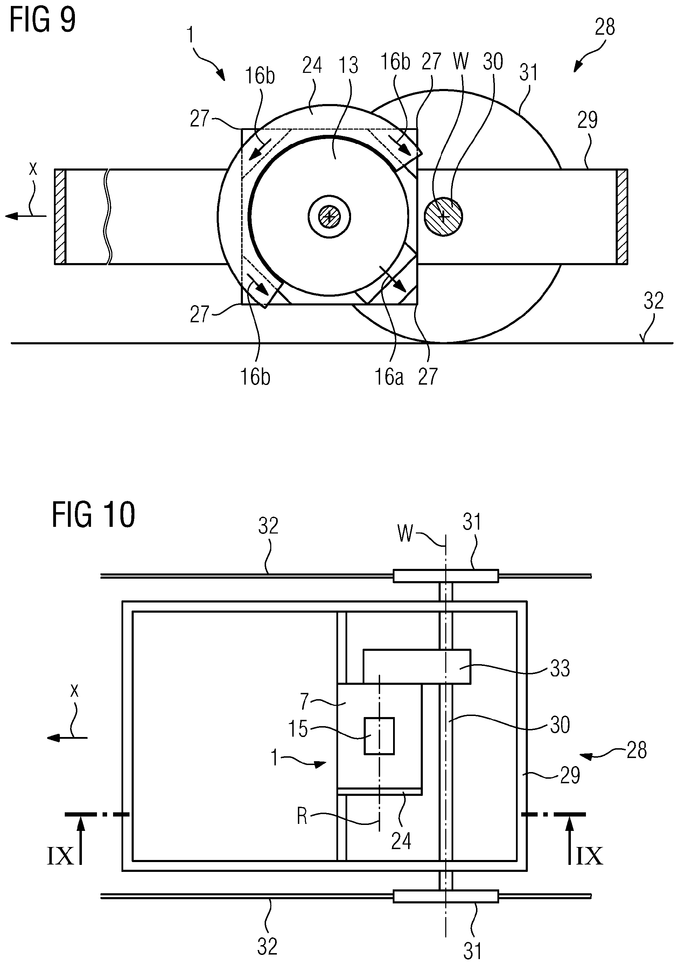

Soweit bisher erläutert, ist die elektrische Maschine 1 der vorliegenden Erfindung universell einsetzbar. In vielen Fällen ist die elektrische Maschine 1 der vorliegenden Erfindung jedoch entsprechend der Darstellung in den FIG 9 und 10 Bestandteil des Fahrgestells 28 eines Schienenfahrzeugs. FIG 9 zeigt das Fahrgestell 28 aus einer Richtung IX-IX (siehe FIG 10). Die Richtung IX-IX korrespondiert mit der Richtung A in FIG 2. FIG 10 zeigt das Fahrgestell 28 von oben.

Das Fahrgestell 28 kann insbesondere ein Drehgestell sein. Das Fahrgestell 28 weist gemäß den FIG 9 und 10 einen Rahmen 29 auf. In dem Rahmen ist eine Radsatzwelle 30 gelagert. Die Radsatzwelle 30 ist um eine Wellenachse W rotierbar. Mittels an der Radsatzwelle 30 angeordneter Räder 31 kann sich das Fahrgestell 28 somit auf einem Untergrund 32 (insbesondere Schienen) in einer Fahrtrichtung x bewegen.

In aller Regel sind in dem Rahmen 29 mehrere Radsatzwellen 30 gelagert. Im Rahmen der vorliegenden Erfindung kommt es jedoch nur auf diejenige Radsatzwelle 30 von an, die mit der elektrischen Maschine 1 angetrieben wird. Die anderen Radsatzwellen 30 sind daher in den FIG 9 und 10 nicht mit dargestellt.

Die elektrische Maschine 1 ist in Fahrtrichtung x gesehen vor oder hinter der Radsatzwelle 30 in dem Rahmen 29 befestigt. Die Rotationsachse R der elektrischen Maschine 1 verläuft gemäß der Darstellung in den FIG 9 und 10 parallel zur Wellenachse W der Radsatzwelle 30. Alternativ könnte sie mit der Wellenachse W auch einen Winkel bilden, insbesondere orthogonal zur Wellenachse W. Auch wenn die Rotationsachse R mit der Wellenachse W einen Winkel bildet, verläuft die Rotationsachse R jedoch - zumindest in aller Regel - horizontal. Die Rotorwelle 3 der elektrischen Maschine 1 wirkt über ein Getriebe 33 auf die Radsatzwelle 30. Eine möglicherweise vorhandene Kupplung ist in den FIG 9 und 10 nicht mit dargestellt. Die elektrische Maschine 1 ist also ein Traktionsantrieb des Schienenfahrzeugs. Das Getriebe 33 umfasst im einfachsten Fall lediglich ein auf der Rotorwelle 3 drehfest angeordnetes Zahnrad und ein auf der Radsatzwelle 30 drehfest angeordnetes Zahnrad, wobei die beiden Zahnräder miteinander kämmen. Das Getriebe 33 kann aber auch komplexer ausgebildet sein.

In dem Fall, dass das Gehäuse 7 der elektrischen Maschine 1 die obenstehend erläuterte quadratische Außenkontur aufweist und weiterhin in den Eckbereichen 27 sowohl die zweiten als auch die dritten Kühlkanäle 21, 25 angeordnet sind, sind entsprechend der Darstellung in FIG 9 zumindest im unteren der beiden der Radsatzwelle 30 zugewandten Eckbereiche 27 zweite Kühlkanäle 21 angeordnet. Im oberen der beiden der Radsatzwelle 30 abgewandten Eckbereiche 27 sind hingegen dritte Kühlkanäle 25 angeordnet. In den beiden anderen Eckbereichen 27 können nach Bedarf zweite oder dritte Kühlkanäle 21, 25 angeordnet sein.

Die vorliegende Erfindung weist viele Vorteile auf. Insbesondere ist dadurch, dass die Entwärmung von Rotor 2 und Stator 5 sowohl über die Rotorwelle 3 als auch über das Gehäuse 7 erfolgt, eine sehr effiziente Wärmeabfuhr möglich. Dies wird durch die entsprechende Vergrößerung der zur Wärmeübertragung genutzten Flächen möglich. Die Lager 4 sind in thermischer Hinsicht gut von den heißen Aktivteilen (Rotor 2 und Stator 5) entkoppelt.

Obwohl die Erfindung im Detail durch das bevorzugte Ausführungsbeispiel näher illustriert und beschrieben wurde, ist die Erfindung durch die beigefügten Ansprüche definiert.

## Patentansprüche

1. Elektrische Maschine,
- wobei die elektrische Maschine (1) einen Rotor (2) aufweist, der auf einer Rotorwelle (3) angeordnet ist,
- wobei die Rotorwelle (3) in Lagern (4) gelagert ist, so dass der Rotor (2) zusammen mit der Rotorwelle (3) um eine Rotationsachse (R) rotierbar ist,
- wobei der Rotor (2) radial außen von einem Stator (5) und der Stator (5) radial außen von einem Gehäuse (7) umgeben ist,
- wobei an einem ersten und einem zweiten axialen Ende von Rotor (2) und Stator (5) ein erstes und ein zweites Abdeckelement (8, 9), die als Wärmetauscher fungieren, angeordnet sind, mittels derer der Rotor (2) und der Stator (5) gegenüber der Umgebung der elektrischen Maschine (1) gekapselt sind,
- wobei das erste Abdeckelement (8) radial außen und axial auf der dort von Rotor (2) und Stator (5) abgewandten Seite von einem Luftführungselement (12) umgeben ist und das zweite Abdeckelement (9) radial außen und axial auf der dort von Rotor (2) und Stator (5) abgewandten Seite von einem inneren Ringelement (13) umgeben ist,
- wobei im Gehäuse (7) oder zwischen Gehäuse (7) und Stator (5) axial verlaufende erste und zweite Kühlkanäle (14,21) angeordnet sind und in der Rotorwelle (3) und/oder im Rotor (2) axial verlaufende Rotorkanäle (20) angeordnet sind,
- wobei das Gehäuse (7) radial außen einen Lufteinlass (15) aufweist, über welchen den ersten Kühlkanälen (14) ein Kühlluftstrom (16) zugeführt wird,
- wobei zumindest ein Teil (16a) des Kühlluftstroms (16) über die ersten Kühlkanäle (14) dem Luftführungselement (12) oder einem Zwischenraum zwischen dem ersten Abdeckelement (8) und dem Luftführungselement (12), das heißt zum ersten axialen Ende der Maschine, zugeführt wird, dort nach radial innen umgelenkt wird, sodann über die Rotorkanäle (20) dem inneren Ringelement (13) oder einem Zwischenraum zwischen dem zweiten Abdeckelement (9) und dem inneren Ringelement (13) zugeführt wird, dort nach radial außen umgelenkt und den zweiten Kühlkanälen (21) zugeführt wird, sodann mittels der zweiten Kühlkanäle (21) axial durch die elektrische Maschine geführt wird und schließlich in die Umgebung der elektrischen Maschine entweicht, und
- wobei das innere Ringelement (13) radial außen zumindest über einen Teilumfang von einem äußeren Ringelement (24) umgeben ist, wobei im Gehäuse (7) oder zwischen Gehäuse (7) und Stator (5) axial verlaufende dritte Kühlkanäle (25) angeordnet sind und wobei ein weiterer Teil (16b) des Kühlluftstroms (16) dem äußeren Ringelement (24) oder einem Zwischenraum zwischen dem Gehäuse (7) und dem äußeren Ringelement (24), das heißt zum zweiten axialen Ende der Maschine, zugeführt wird, dort tangential umgelenkt und den dritten Kühlkanälen (25) zugeführt wird und schließlich mittels der dritten Kühlkanäle (25) axial durch die elektrische Maschine (1) geführt wird und sodann in die Umgebung der elektrischen Maschine (1) entweicht.

2. Elektrische Maschine nach Anspruch 1, **dadurch gekennzeichnet, dass** das Gehäuse (7) orthogonal zur Rotationsachse (R) gesehen eine quadratische Außenkontur aufweist, dass die ersten Kühlkanäle (14) in zumindest einem Seitenbereich (26) der Außenkontur, insbesondere in genau einem Seitenbereich (26) der Außenkontur, angeordnet sind und dass die zweiten Kühlkanäle (21) in den Eckbereichen (27) der Außenkontur angeordnet sind.

3. Elektrische Maschine nach Anspruch 1, **dadurch gekennzeichnet, dass** das äußere Ringelement (24) sich von der Rotationsachse (R) aus gesehen über einen Winkelbereich (α) von ca. 180° oder weniger erstreckt, insbesondere von ca. 90° oder ca. 45°.

4. Elektrische Maschine nach einem der obigen Ansprüche, **dadurch gekennzeichnet, dass** mindestens eines der Abdeckelemente (8,9) rotorfest befestigt ist.

5. Elektrische Maschine nach einem der obigen Ansprüche, **dadurch gekennzeichnet, dass** das Luftführungselement (12) und/oder das innere Ringelement (13) jeweils eines der Lager (4) halten.

6. Elektrische Maschine nach einem der obigen Ansprüche, **dadurch gekennzeichnet, dass** das Luftführungselement (12) und/oder das innere Ringelement (13) aus Aluminium oder einer Aluminiumlegierung bestehen.

7. Elektrische Maschine nach einem der obigen Ansprüche, **dadurch gekennzeichnet, dass** der Lufteinlass (15) an der Oberseite des Gehäuses (7) angeordnet ist.

8. Elektrische Maschine nach einem der obigen Ansprüche, **dadurch gekennzeichnet, dass** die Abdeckelemente (8,9) aus Aluminium, Kupfer oder einer Aluminium- oder Kupferlegierung bestehen oder Blöcke aus diesen Materialien enthalten.

9. Fahrgestell eines Schienenfahrzeugs, insbesondere Drehgestell,
- wobei das Fahrgestell einen Rahmen (29) aufweist,
- wobei in dem Rahmen (29) eine Radsatzwelle (30) gelagert ist, so dass die Radsatzwelle (30) um eine Wellenachse (W) rotierbar ist,
- wobei in dem Rahmen (29) in Fahrtrichtung (x) des Fahrgestells gesehen vor oder hinter der Radsatzwelle (30) eine elektrische Maschine (1) befestigt ist,
- wobei die Rotorwelle (3) der elektrischen Maschine (1) über ein Getriebe (33) auf die Radsatzwelle (30) wirkt, **dadurch gekennzeichnet, dass** die elektrische Maschine (1) als elektrische Maschine nach einem der obigen Ansprüche ausgebildet ist.

10. Fahrgestell nach Anspruch 9, **dadurch gekennzeichnet, dass** das Gehäuse (7) der elektrischen Maschine (1) orthogonal zur Rotationsachse (R) gesehen eine quadratische Außenkontur aufweist und dass zumindest im unteren der beiden der Radsatzwelle (30) zugewandten Eckbereiche (27) zweite Kühlkanäle (21) angeordnet sind.

11. Fahrgestell nach Anspruch 10, **dadurch gekennzeichnet, dass** die elektrische Maschine (1) die dritten Kühlkanäle (25) aufweist und dass zumindest im oberen der beiden der Radsatzwelle (30) abgewandten Eckbereiche (27) dritte Kühlkanäle (25) angeordnet sind.

## Claims

1. Electric machine,
- wherein the electric machine (1) has a rotor (2) which is arranged on a rotor shaft (3),
- wherein the rotor shaft (3) is supported in bearings (4) such that the rotor (2) together with the rotor shaft (3) is rotatable around an axis of rotation (R),
- wherein the rotor (2) is surrounded radially on the outside by a stator (5) and the stator (5) radially on the outside by a casing (7),
- wherein a first and a second covering element (8,9), which function as heat exchangers, are arranged at a first and a second axial end of the rotor (2) and stator (5), by means of which the rotor (2) and the stator (5) are enclosed with respect to the environment of the electric machine (1),
- wherein the first covering element (8) is surrounded radially on the outside, and axially on the side facing away from the rotor (2) and stator (5) there, by an air guide element (12), and the second covering element (9) is surrounded radially on the outside, and axially on the side facing away from the rotor (2) and stator (5) there, by an inner ring element (13),
- wherein first and second cooling channels (14,21) running axially are arranged in the casing (7) or between the casing (7) and stator (5), and rotor channels (20) running axially are arranged in the rotor shaft (3) and/or in the rotor (2),
- wherein the casing (7) has an air inlet (15) radially on the outside, via which a cooling air flow (16) is fed to the first cooling channels (14),
- wherein at least one part (16a) of the cooling air flow (16) is fed via the first cooling channels (14) to the air guide element (12) or to an interspace between the first covering element (8) and the air guide element (12), in other words to the first axial end of the machine, is deflected radially to the inside there, and is then fed via the rotor channels (20) to the inner ring element (13) or to an interspace between the second covering element (9) and the inner ring element (13), is deflected radially to the outside there and fed to the second cooling channels (21), and is then routed by means of the second cooling channels (21) axially through the electric machine, and finally escapes into the environment of the electric machine, and
- wherein the inner ring element (13) is surrounded radially on the outside at least over part of its periphery by an outer ring element (24), wherein third cooling channels (25) running axially are arranged in the casing (7) or between the casing (7) and stator (5), wherein a further part (16b) of the cooling air flow (16) is fed to the outer ring element (24) or to an interspace between the casing (7) and the outer ring element (24), in other words to the second axial end of the machine, is deflected tangentially there and fed to the third cooling channels (25), and is finally routed by means of the third cooling channels (25) axially through the electric machine (1), and then escapes into the environment of the electric machine (1).

2. Electric machine according to claim 1,
**characterised in that**
the casing (7) has a square outer contour as viewed orthogonally to the axis of rotation (R), the first cooling channels (14) are arranged in at least one side region (26) of the outer contour, in particular in precisely one side region (26) of the outer contour, and the second cooling channels (21) are arranged in the corner regions (27) of the outer contour.

3. Electric machine according to claim 1,
**characterised in that**
the outer ring element (24) extends over an angular range (α) of approx. 180° or less, in particular approx. 90° or approx. 45°, as viewed from the axis of rotation (R).

4. Electric machine according to one of the foregoing claims,
**characterised in that**
at least one of the covering elements (8,9) is fixed firmly to the rotor.

5. Electric machine according to one of the foregoing claims,
**characterised in that**
the air guide element (12) and/or the inner ring element (13) each hold one of the bearings (4).

6. Electric machine according to one of the foregoing claims,
**characterised in that**
the air guide element (12) and/or the inner ring element (13) consist of aluminium or an aluminium alloy.

7. Electric machine according to one of the foregoing claims,
**characterised in that**
the air inlet (15) is arranged on the top side of the casing (7) .

8. Electric machine according to one of the foregoing claims,
**characterised in that**
the covering elements (8,9) consist of aluminium, copper, or an aluminium or copper alloy or contain blocks of the said materials.

9. Chassis of a railcar, in particular a bogie,
- wherein the chassis has a frame (29),
- wherein a wheelset axle (30) is supported in the frame (29) such that the wheelset axle (30) is rotatable around a shaft axis (W),
- wherein an electric machine (1) is fixed in the frame (29) in front or in rear of the wheelset axle (30) as viewed in the direction of travel (x) of the chassis,
- wherein the rotor shaft (3) of the electric machine (1) acts on the wheelset axle (30) via a gearbox (33),
**characterised in that**
the electric machine (1) is realized in the form of an electric machine according to one of the foregoing claims.

10. Chassis according to claim 9,
**characterised in that**
the casing (7) of the electric machine (1) has a square outer contour as viewed orthogonally to the axis of rotation (R), and second cooling channels (21) are arranged at least in the lower of the two corner regions (27) facing toward the wheelset axle (30).

11. Chassis according to claim 10,
**characterised in that**
the electric machine (1) has the third cooling channels (25) and third cooling channels (25) are arranged at least in the upper of the two corner regions (27) facing away from the wheelset axle (30).

## Revendications

1. Machine électrique,
- dans laquelle la machine (1) électrique a un rotor (2), qui est monté sur un arbre (3) de rotor,
- dans laquelle l'arbre (3) du rotor est monté dans des paliers (4) de manière à ce que le rotor (2) puisse tourner ensemble avec l'arbre (3) du rotor autour d'un axe (R) de rotation,
- dans laquelle le rotor (2) est entouré à l'extérieur radialement d'un stator (5) et le stator (5) à l'extérieur radialement d'une carcasse (7),
- dans laquelle à une première et à une deuxième extrémité axiale du rotor (2) et du stator (5) sont disposés un premier et un deuxième élément (8, 9) de recouvrement, qui fonctionnent en échangeur de chaleur, au moyen desquels le rotor (2) et le stator (5) sont encapsulés par rapport à l'atmosphère extérieure de la machine (1) électrique,
- dans laquelle le premier élément (8) de recouvrement est entouré à l'extérieur radialement et axialement du côté opposé loin du rotor (2) et du stator (5) d'un élément (12) de conduite de l'air et en ce que le deuxième élément (9) de recouvrement est entouré à l'extérieur radialement et axialement du côté loin du rotor (2) et du stator (3) d'un élément (13) intérieur annulaire,
- dans laquelle des premier et deuxième canaux (14, 21) de refroidissement sont disposés en s'étendant axialement dans la carcasse (7) ou entre la carcasse (7) et le stator (5) et des canaux (20) de rotor sont disposés en s'étendant axialement dans l'arbre (3) du rotor et/ou dans le rotor (2),
- dans laquelle la carcasse (7) a, à l'extérieur radialement, une entrée (15) d'air, par laquelle un courant (16) d'air de refroidissement est envoyé aux premiers canaux (14) de refroidissement,
- dans laquelle au moins une partie (16a) du courant (16) de l'air de refroidissement est envoyée par les premiers canaux (14) de refroidissement à l'élément (12) de conduite de l'air ou à un espace intermédiaire entre le premier élément (8) de recouvrement et l'élément (12) de conduite de l'air, c'est-à-dire vers la première extrémité axiale de la machine, y est déviée vers l'intérieur radialement, ensuite est envoyé par les canaux (20) du rotor à l'élément (13) annulaire intérieur ou un espace intermédiaire entre le deuxième élément (9) de recouvrement et l'élément (13) annulaire intérieur, y est déviée vers l'extérieur radialement et est envoyée aux deuxièmes canaux (21) de refroidissement, ensuite est conduite au moyen des deuxièmes canaux (21) de refroidissement axialement dans la machine électrique et se dégage finalement dans l'atmosphère extérieure de la machine électrique, et
- dans laquelle l'élément (13) annulaire intérieur est entouré à l'extérieur radialement au moins sur une partie du pourtour d'un élément (24) annulaire extérieur,
- dans laquelle des troisièmes canaux (25) de refroidissement sont disposés en s'étendant axialement dans la carcasse (7) ou entre la carcasse (7) et le stator (5), et
- dans laquelle une autre partie (16b) du courant (16) d'air de refroidissement est envoyée à l'élément (24) annulaire extérieur ou à un espace intermédiaire entre la carcasse (7) et l'élément (24) annulaire extérieur, c'est-à-dire vers la deuxième extrémité axiale de la machine, y est déviée tangentiellement et est envoyée aux troisièmes canaux (25) de refroidissement et finalement est conduite au moyen des troisièmes canaux (25) de refroidissement axialement dans la machine (1) électrique et ensuite se dégage dans l'atmosphère extérieure de la machine (1) électrique.

2. Machine électrique suivant la revendication 1, **caractérisée en ce que** la carcasse (7,) considérée orthogonalement à l'axe (R) de rotation, a un contour extérieur carré, **en ce que** les premiers canaux (14) de refroidissement sont disposés au moins dans une partie (26) latérale du contour extérieur, notamment exactement dans une partie (26) latérale du contour extérieur et **en ce que** les deuxièmes canaux (21) de refroidissement sont disposés dans les parties (27) de sommet du contour extérieur.

3. Machine électrique suivant la revendication 1, **caractérisée en ce que** l'élément (24) annulaire extérieur s'étend, considéré à partir de l'axe (R) de rotation, sur une région (α) angulaire d'environ 180° ou moins, notamment d'environ 90° ou d'environ 45°.

4. Machine électrique suivant l'une des revendications précédentes, **caractérisée en ce qu'**au moins l'un des éléments (8, 9) de recouvrement est solidaire du rotor.

5. Machine électrique suivant l'une des revendications précédentes, **caractérisée en ce que** l'élément (12) de conduite de l'air et/ou l'élément (13) annulaire intérieur maintiennent chacun l'un des paliers (4).

6. Machine électrique suivant l'une des revendications précédentes, **caractérisée en ce que** l'élément (12) de conduite de l'air et/ou l'élément (13) annulaire intérieur est en aluminium ou en un alliage d'aluminium.

7. Machine électrique suivant l'une des revendications précédentes, **caractérisée en ce que** l'entrée (15) d'air est disposée du côté supérieur de la carcasse (7).

8. Machine électrique suivant l'une des revendications précédentes, **caractérisée en ce que** les éléments (8, 9) de recouvrement sont en aluminium, en cuivre ou en un alliage d'aluminium ou de cuivre ou contiennent des blocs en ce matériau.

9. Châssis d'un véhicule ferroviaire, notamment boggie,
- dans lequel le châssis a un cadre (29),
- dans lequel dans le cadre (29) est montée une roue (30) d'essieu de manière à ce que la roue (30) d'essieu puisse tourner autour d'un axe (W) d'arbre,
- dans lequel dans le cadre (29) est fixé, considéré dans le sens (x) de déplacement du châssis, avant ou derrière l'arbre (30) d'essieu une machine (1) électrique,
- dans lequel l'arbre (3) du rotor de la machine (1) électrique agit par l'intermédiaire d'une transmission (33) sur l'arbre (30) d'essieu,
**caractérisé en ce que** la machine électrique est constituée en machine électrique suivant l'une des revendications précédentes.

10. Châssis suivant la revendication 9, **caractérisé en ce que** la carcasse (7) de la machine électrique a, considérée orthogonalement à l'axe (R) de rotation un contour extérieur carré et **en ce qu'**au moins en dessous des deux parties (27) de sommet, tournées vers l'arbre (30) d'essieu, sont prévus deux canaux (21) de refroidissement.

11. Châssis suivant la revendication 10, **caractérisé en ce que** la machine (1) électrique a les troisièmes canaux (25) de refroidissement et **en ce qu'**au moins au-dessus des deux parties (27) de sommet loin de l'arbre (30) d'essieu sont disposés des troisièmes canaux (25) de refroidissement.
